# EUROPEAN PATENT APPLICATION

(11) **EP 4 573 879 A1**
(43) Date of publication of application: **25.06.2025**
(21) Application number: 24219819.0
(22) Date of filing: 13.12.2024
(51) Int. Cl.: A01D 46/26

(54) **FRUIT TRANSPORT AND STORAGE DEVICE FOR TREE CULTIVATION MACHINES**

(30) Priority: 21.12.2023 ES 202331062
(71) Applicant: Ianus Ingenieria, S.L.U., 13620 Pedro Munoz-Ciudad Real (ES)
(72) Inventor: ORTIZ CICUENDEZ, José, 13620 PEDRO MUÑOZ - CIUDAD REAL (ES)
(74) Representative: Urizar Anasagasti, Jesus Maria

(57) **Abstract**

The present invention relates to a fruit transport and storage device for tree cultivation machines, of the straddle type or travelling above a row of trees, from which make the fruit thereof fall, by vibrating the trunk, onto respective belts (2) located below the vibrating clamps on both sides of the row of trees to be harvested, which belts transport the fruit horizontally towards the rear portion of the machine (1), from where it is lifted by means of respective vertical belts (3) and poured into respective sacks (4) hung on the rear portion of the machine on both sides thereof. These sacks (4) are supported by a mechanism that keeps them open in the loading position and has lowering means that deposits them on the ground once they are full of harvested fruit.

## Description

### Technical field

This device falls within the agricultural machinery manufacturing sector, especially for harvesting fruit trees, and more specifically for the transport and final storage of the harvested fruit.

### State of the art

There are several references in the state of the art to machines for harvesting fruit from trees, especially machines that operate by vibrating the trunk of the tree to cause the fruit to fall to the ground. Traditional crops, for example during the olive harvest, provide for blankets in which the products that have fallen from the tree are collected and from where they are later collected. Straddle machines have subsequently emerged, such as the one described in the document EP4032396, which have a structure capable of moving above and on both sides of the tree to be cultivated. Reference is also made in this document to other documents disclosing machines for this purpose in which the fruit, once collected on a conveyor belt, is transferred, for example via an auger, to a trailer running parallel to the machine (ES1047154U), or in containers at the rear portion of the machine (US5074107).

Document WO2023275415 describes a fruit storage equipment installed on the sides of a straddle-type machine, consisting of crates made of sheet metal attached to the machine, into which the fallen fruit is transferred onto strips or belts on which it is collected. When the crates are full, they are unloaded using a tipping mechanism which, by means of a hydraulic cylinder, rotates this crate so that the fruit falls into another hopper. This system is operational, but it is not fully efficient because installing this device requires a considerable increase in the width of the machine, while at the same time it is necessary to coordinate the operation of the machine with an auxiliary loading means and an auxiliary transport means, in order to harvest the fruit without it falling to the ground. In addition, these hoppers take up critical lateral space, especially in small planting patterns, and as it is not possible to fold them back, they negatively affect the manoeuvrability of the equipment, increasing its turning radius considerably.

The state of the art does not make any reference to a storage system for storing fruit by means of sacks installed on a straddle-type harvesting machine.

### Description of the invention

Based on the prior art, an aim of the present invention is to provide a set of elements capable of transporting and storing fruits in straddle harvesting machines of the type described. The invention proposes a continuous storage system for storing the collected fruit by means of reusable sacks, installed on both sides of the machine, in such a way that, as these sacks are filled, they are deposited in easily accessible areas for subsequent transport to the processing plant.

In order to achieve the proposed objectives, mentioned in the preceding section, the invention proposes a fruit transport and storage device for tree cultivation machines, having the features of claim 1.

The multi-purpose tree cultivation machine described in document EP4032396, in its harvesting phase, incorporates a continuous vibration device, which is also described in document WO2023079189, based on two vibration clamps that operate simultaneously. These clamps vibrate the trunk of the trees at a certain frequency and the fruits fall onto belts that transport them to the rear portion of the machine, where they are now collected by the device of the invention, storing them in large sacks, capable of housing more than 2 m³ of fruit. These sacks are incorporated on each side of the machine, joined to a node that is independent of the height that the machine adopts at any moment in order to be able to adjust according to the elevation of the belts (it must be remembered that this machine has a gantry that is telescopically adjustable both in width and in height).

These sacks hang from the rear portion of the machine and when they are filled with fruit, a hydraulic system is able to leave them resting on the ground. The sacks have an unfavourable surface area/height ratio, so a certain impact against the ground is necessary for the fruit to spread inside the sack and create a base so that the sack remains stable in a vertical position; for this reason, the speed at which the cylinder descends is high in order to create this base in the sack.

Subsequently, the installation of other sacks is facilitated to continue harvesting, while the full sacks remain in the field until a forklift or other lifting and transport means sends them to the processing plant.

At the same time, the invention incorporates a system whereby the frame of the sacks is folded to minimise the floor space required and so as not to negatively impact the turning radius of the machine. This device provides for a rotation of the sack securing bars whereby these components can be retracted towards the inner portion of the machine in order to reduce the overhang of the machine when transporting the machine from one field to another.

A rotation node is also incorporated in the structure that integrates the vertical belt which, actuated by a hydraulic cylinder, causes both belts to tilt when packing the machine for cultivating tress so that it can comply with road transport measurements. In addition, if the harvesting field is very small, the folding of one of these belts can be actuated to facilitate the turning of the machine, as well as the support bars of the sacks.

### Description of the drawings

As a complement to the description provided herein, and for the purpose of helping to make the features of the invention more readily understandable, the present specification is accompanied by a set of drawings which, by way of illustration and not limitation, represent the following:

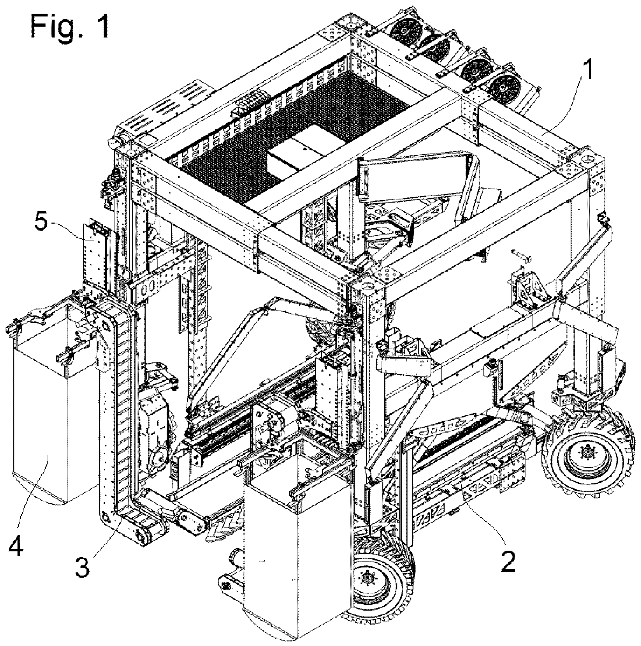

- Figure 1 shows an isometric rear view of the device of the invention as well as of a straddle machine for tree cultivation (1). This figure shows the lower belts (2), located below the vibrating clamps, which transport the fruit horizontally towards the rear portion of the machine, the vertical belts (3) and the fruit storage sacks (4).

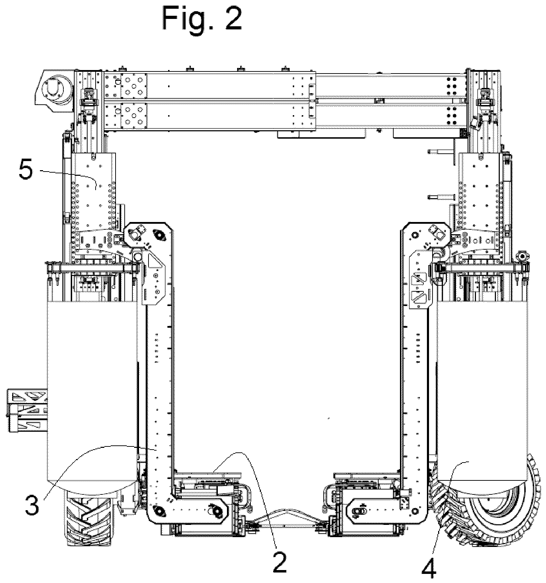

- Figure 2 shows a rear view of the machine showing the horizontal (2) and vertical (3) conveyor belts, the sacks (4) with the lifting node (5) thereof.

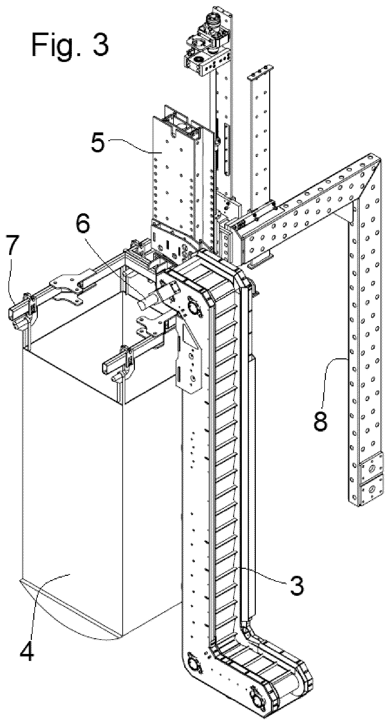

- Figure 3 shows the detail view of the node (5) where the whole device is anchored. As a detail, the system that raises/lowers the sacks comprises a hydraulic cylinder and a guide system. The portion of the machine (8) that raises/lowers the entire system according to the height at which harvesting takes place. The vertical belt (3), which incorporates a rotary shaft (6) by means of another hydraulic cylinder to pick up the machine and/or to facilitate turning in fields requiring demanding turning radii.

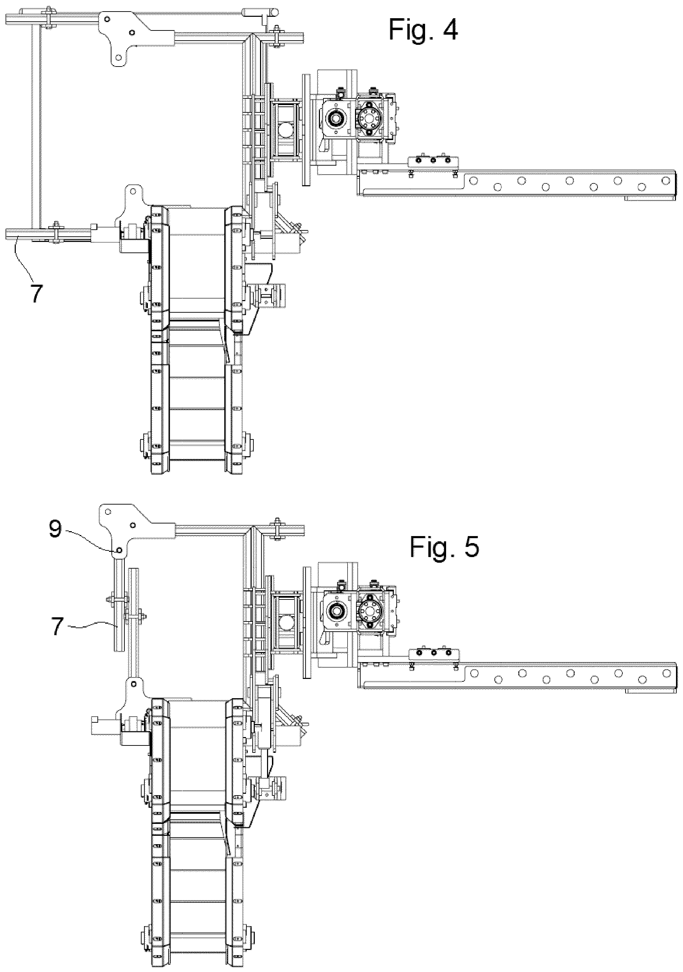

- Figures 4 and 5 show plan views of the securing mechanism for securing sacks (4), consisting of respective arms (7), which can be retracted by means of rotary shafts (9), when the machine is closed, in order to reduce the machine's overhang and keep the turning radius as small as possible.

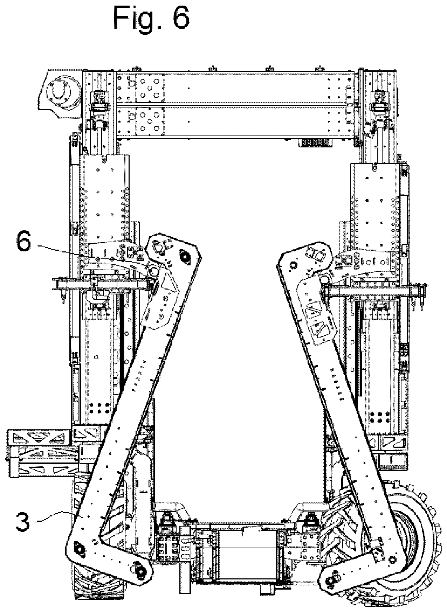

- Figure 6 shows a rear view of the machine showing the vertical conveyor belts (3) in a retracted position, when the machine is in the packaged position, or in order to exit from rows of trees that require a smaller turning radius, and the overhang in the centre of the machine has to be reduced.

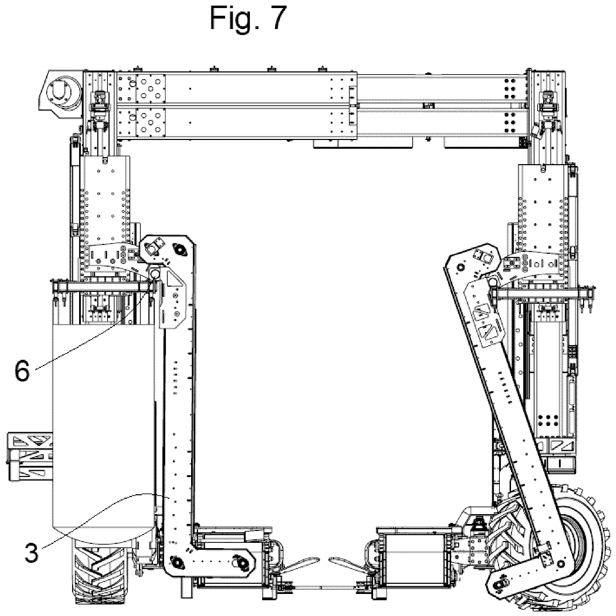

- Figure 7 shows a rear view of the machine, similar to figure 6, where the left side holds the sack (4) and the vertical belt (3) is in the harvesting position, and the right side has the vertical belt tilted to reduce the turning radius in order to exit a field of trees with the minimum turning radius.

### Embodiment of the invention

As can be seen in the referenced figures, the invention consists of a fruit transport and storage device for tree cultivation machines; especially straddle-type machines, that is, which travel above a row of trees and which have vibrating clamps on their trunks to make their fruit fall onto respective horizontal belts (2), located below the vibrating clamps, and on both sides of the row of trees to be harvested. These belts transport the fallen fruit to the rear portion of the machine (1), where the device of the invention is positioned to load them into respective sacks (4), hung at the rear portion of the machine (1), on both sides thereof.

This device comprises respective vertical belts (3), connected to the respective horizontal belts (2), which lift the harvested fruit to the upper mouth of the respective sacks (4) into which the harvested fruit is loaded as it falls from the tree and is collected on the horizontal belts (2) of the straddle machine.

The sacks (4) are held open and suspended by means of a securing mechanism consisting of respective arms (7), which keeps the corresponding sack open and hanging slightly below where the corresponding vertical belt (3) ends. In this area there is a lifting node (5) for said sack (4) which comprises a hydraulic cylinder for raising the same to an elevated filling position and for lowering it to the ground once it is filled with the harvested fruit. In order for the sack (4) to remain stable once it has been deposited on the ground, it is provided for the hydraulic cylinder to lower at a sufficiently high speed so that the fruit at the bottom of the sack (4) expand, creating a support surface sufficient for it to remain upright on its own once it has been deposited on the ground. When the full sack is deposited on the ground, another empty sack is installed on the arms (7) to continue harvesting, while the full sack is ready to be loaded and transported by a mechanical means, for example, a forklift truck, so that the work of the machine is continuous, without having to stop to wait for the auxiliary mechanical transport means for transporting the harvested fruit.

Each of the vertical belts (3) has a double "L" configuration, with a central vertical section and two horizontal sections in opposite directions, wherein the lower section faces the corresponding horizontal belt (2), while the upper horizontal section faces the inside of the sack (4). The vertical section is parallel to the sack (4) on the inner portion of the machine.

Each vertical belt (3) is mounted on top of a rotating shaft (6) and has an actuation cylinder that allows the assembly thereof to rotate at its upper end, such that the lower end moves outwards, towards the position occupied by the sack (4), which allows, on the one hand, the machine to be packed (see Figure 6), when the machine is closed laterally, the rotation of the belts decreases its plan projection and thus, the machine remains within the maximum legal dimensions for road transport. Moreover, if the machine is in harvesting mode and the end of the row of trees is difficult to exit, the belt can pivot after the release of the sacks on the ground and reduces the minimum turning radius of the machine by reducing the overhang in the central portion of the machine.

Figures 4 and 5 show the securing mechanism for securing the sacks (4), which consists of respective arms (7) that form a kind of hook or fork from which the corresponding sack (4) hangs. These arms (7) have an intermediate rotary shaft (9) by which they can be folded when the machine is closed, in order to reduce the overhang of the machine and keep the turning radius as small as possible (See Figure 6-7).

The assembly of the device located on each side of the machine (1) is supported on a piece (8) of said machine, which in the case of the machine of document EP4032396 is the part that performs the raising/lowering depending on the height at which harvesting is taking place at any given moment.

Having described the nature of the invention, as well as a preferred exemplary embodiment, it is obvious that the invention is industrially applicable in the indicated sector.

Likewise, it is hereby stated for all appropriate purposes that the materials, shape, size, and arrangement of the described elements can be modified, provided that this does not entail altering the essential features of the invention claimed below:

## Claims

1. A fruit transport and storage device for tree cultivation machines, of the straddle type or travelling above a row of trees, from which make the fruit thereof fall, by vibrating the trunk, onto respective belts (2) located below the vibrating clamps on both sides of the row of trees to be harvested, which belts transport the fruit horizontally towards the rear portion of the machine (1), **comprising:**
- respective vertical belts (3), connected to the respective horizontal belts (2), which lift the harvested fruit to the upper mouth of the respective sacks (4), which are hung on the rear of the machine on both sides thereof,
- securing mechanism for securing the sacks (4) consisting of respective arms (7) that hold the respective sack open and hanging slightly below where the corresponding vertical belt (3) ends,
- a lifting node (5) for the sacks (4) comprising a hydraulic cylinder for raising the sacks (4) to the filling position and for lowering same to the ground once they are full of harvested fruit, with the particular feature that said hydraulic cylinder lowers at a sufficiently high speed so that the fruit at the bottom of the sack (4) expand, creating a support surface sufficient for it to remain upright on its own once it has been deposited on the ground.

2. The device according to claim 1, wherein the vertical belt (3) has a double "L" configuration, with respective horizontal sections, the lower section facing the corresponding horizontal belt (2) and the upper section facing the inside of the bag (4), joined by a vertical section that runs parallel to the sack (4) on the inside of the machine.

3. The device, according to any of the preceding claims, in which the vertical belt (3) incorporates a rotary shaft (6) at the top and an actuation cylinder for actuating the assembly thereof that enables the lower end thereof to rotate outwards, towards the position occupied by the sack (4), in order to pick up the machine and/or reduce the turn radius that the same can adopt.

4. The device, according to any of the preceding claims, wherein the arms (7) that make up the securing mechanism for securing the sacks (4) have respective rotary shafts (9) that allow them to be folded inwards so that, when the machine is closed, its overhang is reduced and the turning radius is as small as possible.
